(19) **Europäisches Patentamt / European Patent Office / Office européen des brevets**

(11) **EP 2 959 316 B1**

(12) # FASCICULE DE BREVET EUROPEEN

(45) Date de publication et mention de la délivrance du brevet:
**23.11.2016 Bulletin 2016/47**

(21) Numéro de dépôt: **14705205.4**

(22) Date de dépôt: **19.02.2014**

(51) Int Cl.:
*G01T 1/02* (2006.01)

(86) Numéro de dépôt international:
**PCT/EP2014/053253**

(87) Numéro de publication internationale:
**WO 2014/128174 (28.08.2014 Gazette 2014/35)**

(54) **PROCEDE DE MESURE DE DOSE AU MOYEN D'UN DETECTEUR DE RAYONNEMENTS, NOTAMMENT D'UN DETECTEUR DE RAYONNEMENTS X OU GAMMA, UTILISE EN MODE SPECTROSCOPIQUE, ET SYSTEME DE MESURE DE DOSE, UTILISANT CE PROCEDE**

VERFAHREN ZUR MESSUNG EINER DOSIERUNG EINES STRAHLUNGSDETEKTORS, INSBESONDERE EINES RÖNTGENSTRAHLEN- ODER GAMMASTRAHLENDETEKTORS, IM SPEKTROSKOPISCHEN MODUS SOWIE DOSIERUNGSMESSSYSTEM UNTER VERWENDUNG DES BESAGTEN VERFAHRENS

METHOD FOR MEASURING DOSAGE BY MEANS OF A RADIATION DETECTOR, ESPECIALLY AN X-RADIATION OR GAMMA-RADIATION DETECTOR, USED IN THE SPECTROSCOPIC MODE, AND DOSAGE MEASUREMENT SYSTEM USING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2013 FR 1351585**

(43) Date de publication de la demande:
**30.12.2015 Bulletin 2015/53**

(73) Titulaire: **AREVA NC**
**92400 Courbevoie (FR)**

(72) Inventeurs:
• **FONTBONNE, Jean-Marc**
**F-14000 Caen (FR)**
• **COLIN, Jean**
**F-14440 Douvres-la-Delivrande (FR)**
• **FONTBONNE, Cathy**
**F-14000 Caen (FR)**
• **JEHANNO, Jacky**
**F-30330 Gaujac (FR)**

(74) Mandataire: **Brevalex**
**95, rue d'Amsterdam**
**75378 Paris Cedex 8 (FR)**

(56) Documents cités:
**US-A- 5 572 028    US-B1- 6 423 972**

• **CLOUVAS A ET AL: "MONTE CARLO BASED METHOD FOR CONVERSION OF IN-SITU GAMMA RAY SPECTRA OBTAINED WITH A PORTABLE GE DETECTOR TO AN INCIDENT PHOTON FLUX ENERGY DISTRIBUTION", HEALTH PHYSICS, LIPPINCOTT, WILLIAMS & WILKINS, HAGERSTON, MD, USA, vol. 74, no. 2, 1 janvier 1998 (1998-01-01), pages 216-230, XP008066085, ISSN: 0017-9078, DOI: 10.1097/00004032-199802000-00007**
• **"Chapter 4" In: Podgorsak: "Radiation Oncology Physics: A Handbook for Teachers and Students", 1 janvier 2006 (2006-01-01), International Atomic Energy Agency, Vienna, XP055090395, ISBN: 92-0-107304-6 pages 101-121, page 117 - page 118**
• **"Strahlenschutzverordnung", INTERNET CITATION, 18 juin 2002 (2002-06-18), XP002388310, Extrait de l'Internet: URL:http://www.rp-giessen.de/me_in/medien/strahlschutz/strlschv_18062002.pdf [extrait le 2006-07-03]**

**Description**

**DOMAINE TECHNIQUE**

La présente invention concerne un procédé de mesure de dose au moyen d'un détecteur de rayonnements, notamment d'un détecteur de rayonnements X ou gamma.

Elle concerne aussi un système de mesure de dose, utilisant ce procédé.

Elle s'applique notamment à la cytométrie de flux, à la physique des hautes énergies et au domaine de l'instrumentation de physique nucléaire.

**ÉTAT DE LA TECHNIQUE ANTÉRIEURE**

De nombreuses grandeurs de dosimétrie ont été définies par les instances internationales : notamment la dose absorbée, la dose personnelle à 10 mm, ou à 70 $\mu$m, la dose sous flux unidirectionnel, normal au personnel, ou sous flux omnidirectionnel. Ces grandeurs sont généralement fondées sur l'expression de la dose absorbée par un milieu donné (souvent des tissus mous) en un point particulier d'un fantôme dont la forme et la nature sont définies par les autorités compétentes.

Pour concevoir un dosimètre permettant de mesurer l'une ou l'autre de ces grandeurs, il est recommandé de se rapprocher au plus près des conditions imposées ou de multiplier les instruments de façon à corriger leurs réponses.

On décrit ci-après diverses techniques connues de dosimétrie.

En dosimétrie X à haute énergie (radiothérapie), les détecteurs généralement utilisés sont des chambres d'ionisation à l'air. L'air est un milieu équivalent aux tissus dans une gamme d'énergies allant de 100 keV à quelques MeV pour les photons. En dosimétrie absolue, les chambres d'ionisation sont immergées dans de l'eau (fantôme équivalent aux tissus). Cette utilisation des chambres d'ionisation et ces propriétés leur confèrent d'excellentes propriétés pour les mesures de doses absorbées.

Pour la dosimétrie des patients traités par radiothérapie, le milieu de détection est généralement le silicium, matériau qui n'est pas équivalent aux tissus. La réponse du silicium est alors corrigée au moyen d'un capot d'équilibrage qui permet de placer le détecteur à la profondeur « virtuelle » désirée et compense sa fonction de réponse. Dans ces conditions, le dosimètre est étalonné pour une profondeur donnée, une qualité de rayonnements donnée et une direction définie.

Pour la dosimétrie des personnes qui manipulent des matières radioactives, la gamme des énergies est radicalement différente de celle qui est utilisée en radiothérapie. On utilise des badges passifs qui sont généralement constitués de plusieurs plages d'accueil contenant des films ou d'autres milieux sensibles tels que le fluorure de lithium par exemple. Chaque plage d'accueil est recouverte d'un capot d'équilibrage donné. L'exploitation simultanée des informations individuelles, respectivement fournies par les divers détecteurs, permet de remonter à la grandeur désirée.

US 5572028 décrit un système de dosimétrie multiéléments. US 6423972 décrit un procédé et un dispositif pour déterminer des spectres neutroniques à l'aide d'au moins deux détecteurs appropriés. On reviendra par la suite sur ces deux documents.

En outre, certains dosimètres exploitent un spectre qui est mesuré dans un détecteur, typiquement un détecteur solide ou un détecteur à base de cristaux scintillants. Le spectre est acquis pendant un temps prédéfini et généralement analysé pour estimer la fluence particulaire incidente : on effectue une déconvolution spectrale. Compte tenu de courbes de transfert établies par les instances internationales, on peut ainsi déterminer la dose absorbée, dans l'unité de mesure souhaitée.

Il s'agit là d'un procédé de correction de réponse par déconvolution spectrale. Un procédé de dosimétrie qui utilise une telle déconvolution est également connu par le document suivant :

US 2009/0127468, Method for the spectrometric photon dosimetry for X-ray and gamma radiation.

Ces procédés connus utilisent un traitement de signal *a posteriori* et ne permettent donc pas de mesurer la dose absorbée en temps réel - tout du moins, sur une gamme très étendue d'énergies des rayonnements incidents.

**EXPOSÉ DE L'INVENTION**

La présente invention a pour but de remédier à cet inconvénient. Et pour ce faire, elle utilise, contrairement à ces procédés connus, une fonction de pondération qui est établie une fois pour toutes.

De façon précise, la présente invention a pour objet un procédé de mesure de dose absorbée, caractérisé en ce que :

- on choisit une gamme d'énergies,
- on choisit un type de dose H,
- on utilise un détecteur de rayonnements d'un type donné,
- on établit des spectres $(dn/dE)_S$ mesurés par le détecteur pour divers rayonnements incidents du type donné S, dont les énergies respectives sont situées dans la gamme choisie et dont les doses respectives $H_S$ sont connues (par mesure ou par calcul), et
- à partir des spectres $(dn/dE)_S$, on établit une fonction de pondération F(E), à savoir une correspondance entre un incrément moyen de dose et une énergie moyenne E, déposée dans le détecteur, ce qui permet à une personne pourvue d'un dosimètre identique au détecteur de rayonnements du type donné, ayant servi à l'établissement de la fonction de pondération F(E), de connaître à tout instant le débit de dose absorbée moyen, exprimé dans la quantité H.

Dans la présente invention, on utilise donc un unique détecteur de rayonnements d'un type donné (l'invention est fondée sur une méthode spectroscopique), alors que les procédés divulgués par US 5572028 et US 6423972 en nécessitent au moins deux. De plus, le procédé divulgué par US 5572028 ne permet pas d'établir des spectres comme on le fait dans la présente invention : ce procédé connu n'est pas capable de mesurer des spectres d'énergie déposée. En outre, dans ce document, il n'est pas question d'établir, à partir de spectres établis, une fonction de pondération du genre de celle qui est utilisée dans la présente invention : dans ce procédé connu, des poids sont mesurés à partir de grandeurs L1, L2..., chaque grandeur étant proportionnelle à l'énergie totale déposée dans l'un des détecteurs utilisés. Et US 6423972 n'est qu'une variation de US 5572028 pour les flux neutroniques.

Selon un mode de réalisation préféré du procédé, objet de l'invention, l'énergie la plus faible de la gamme d'énergies est inférieure à 50 keV.

De préférence, le type de dose H choisi est Hp (0,07).

Selon un mode de réalisation préféré de l'invention, le détecteur est un détecteur de rayonnements X et gamma.

De préférence, le détecteur est choisi parmi les compteurs de photons multi-pixels, les détecteurs au silicium et les ensembles scintillateur-photomultiplicateur.

La fonction de pondération unique, F(E), peut être établie en résolvant simultanément, pour tous les rayonnements S, l'équation :

$$\sum_E F(E).(dn/dE)_S.\Delta E = H_S$$

pour chaque rayonnement S, où $H_S$ représente la dose associée au rayonnement S, $(dn/dE)_S$ représente le nombre de coups, enregistré à l'énergie E pour le rayonnement S et $\Delta E$ représente le pas de mesure d'énergie (il est mentionné ici pour des raisons d'homogénéité des unités de mesure).

La présente invention concerne aussi un système de mesure de dose, utilisant le procédé, objet de l'invention, ce système comprenant :

- un dosimètre identique au détecteur de rayonnements de type donné, ce dosimètre étant apte à fournir des signaux représentatifs des rayonnements qu'il reçoit, et
- un dispositif électronique de traitement, dans lequel est mémorisée la fonction de pondération F(E) et qui est prévu pour traiter les signaux fournis par le dosimètre et déterminer, à tout instant, la dose absorbée moyenne.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement l'absorption d'une certaine dose de rayonnement dans un milieu détecteur donné,
- la figure 2 illustre schématiquement l'absorption de cette dose dans un autre milieu pour lequel on cherche à mesurer une dose H,
- la figure 3 est une vue schématique d'une installation permettant de déterminer la fonction de pondération,
- la figure 4 est une vue schématique d'un mode de réalisation particulier du système de mesure de dose, objet de l'invention, et
- la figure 5 montre le graphe d'un exemple de fonction de pondération.

## EXPOSÉ DÉTAILLÉ DE MODES DE RÉALISATION PARTICULIERS

On donne, dans ce qui suit, divers exemples du procédé, objet de l'invention.

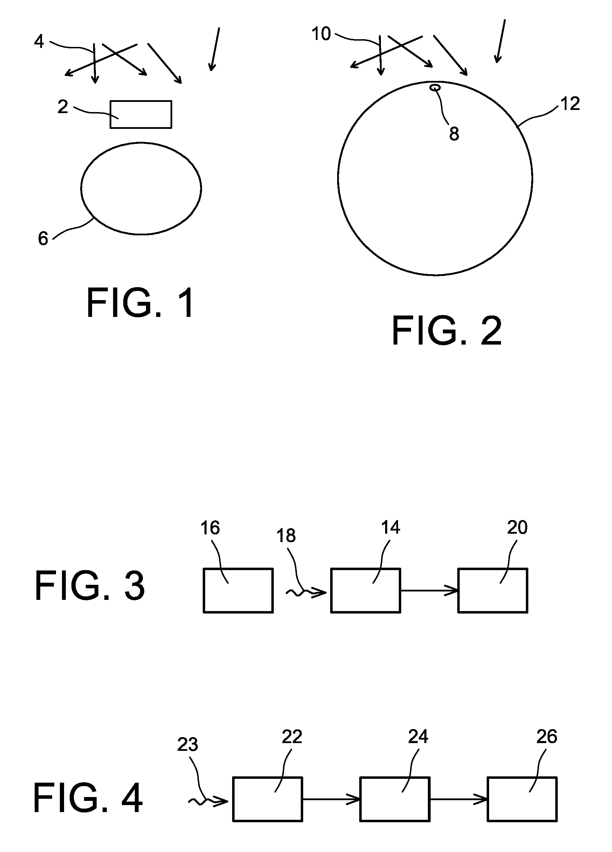

Ce procédé permet de transférer la dose absorbée dans un milieu détecteur donné 2 (voir la figure 1 qui correspond à une situation pratique et sur laquelle les rayonnements incidents ont la référence 4, et le personnel exploitant, ou un fantôme équivalent, a la référence 6) vers un autre milieu pour lequel on cherche à mesurer la grandeur initiale $H$, par exemple $Hp(0,07,\Omega)$, en un point 8 (voir la figure 2 qui correspond à une situation théorique, définie par les autorités, et sur laquelle les rayonnements incidents ont la référence 10 et la référence 12 représente un fantôme).

Cette grandeur initiale n'est pas nécessairement accessible expérimentalement. En ce sens, le procédé se rapproche, comme on l'a vu, de la correction par déconvolution spectrale, sans en présenter les inconvénients ni les limitations. En particulier, on verra par la suite que l'on ne cherche en aucun cas à estimer la fluence particulaire incidente.

Selon l'invention, on enregistre l'énergie $Ed[i]$ (exprimée en unités arbitraires UA) déposée par chaque interaction d'une particule incidente (photon X ou photon gamma) dans le détecteur 2 (figure 1) et l'on corrige cette énergie déposée, par l'intermédiaire d'une fonction de transfert $F$, ou fonction de pondération, qui est établie par étalonnage, dans la même unité que la mesure d'énergie incidente. La grandeur $F(Ed[i])$ correspond alors à l'incrément de dose qu'a produit le rayonnement incident dans la situation théorique (figure 2) où la grandeur initiale $H$ doit être mesurée.

Pour établir la fonction de pondération, on soumet le détecteur à un ensemble de rayonnements incidents, couvrant l'intégralité de la gamme d'énergies envisagée. On précise que cette gamme doit être représentative de l'usage envisagé pour le dosimètre et que l'on sait mesurer ou calculer la grandeur H souhaitée, dans les conditions de référence et pour cette gamme d'énergies.

Pour chaque spectre incident S, correspondant à l'un des rayonnements de l'ensemble, on dispose donc de la connaissance du résultat de la grandeur souhaitée $H_S$ (exprimée en grays ou en sieverts par exemple) et du spectre $(dn/dE)_S$ qui a été enregistré au moyen du détecteur. La notation $(dn/dE)_S$ représente plus précisément le nombre de coups, enregistré à l'énergie $E$ (ou à toute autre grandeur équivalente, exprimée en unités arbitraires), ce nombre étant divisé par le pas de mesure (énergie ou grandeur équivalente, exprimée en unités arbitraires) pour le spectre incident S.

On cherche ensuite la fonction $F(E)$ telle que :

$$\sum_E F(E).\frac{dn}{dE}\bigg)_S .\Delta E = H_S$$

pour tout spectre S,
où $\Delta E$ représente le pas de mesure d'énergie, mentionné simplement ici pour des raisons d'homogénéité des unités de mesure.

On notera les points suivants :

1/ La réponse est linéaire par rapport au nombre de coups, ce qui garantit la linéarité du système d'équations, correspondant à l'égalité ci-dessus, pour toute autre dose délivrée.

2/ La fonction $F(E)$ n'existe pas nécessairement. Le système considéré est très largement surdéterminé et n'admet pas, en général, de solution. A titre d'exemple, si l'on dispose de 10 spectres de référence, enregistrés sur 1024 canaux, le système considéré comporte 1024 inconnues pour 10 équations. Dès lors, on peut soit décomposer la fonction par morceaux, soit définir cette fonction sur une base de polynômes, etc..., pourvu que le nombre d'inconnues à déterminer soit inférieur ou égal au nombre de spectres de référence, la résolution se faisant par exemple par une méthode de moindres carrés.

3/ La fonction $F(E)$ vise à corriger des non-linéarités apparaissant sur l'énergie déposée par les rayonnements ionisant incidents. Ces non-linéarités peuvent avoir :

a) une origine physique, par exemple liée à la non-équivalence du milieu de détection vis-à-vis des tissus, à l'absence rigoureuse de fantôme à l'arrière du détecteur ou au fait que le milieu détecteur n'est pas à la profondeur adéquate et/ou n'a pas les dimensions adéquates,
b) ou une origine expérimentale, liée au détecteur lui-même ou à l'électronique de lecture qui lui est associée.

4/ La fonction $F(E)$ est homogène à l'unité de la grandeur désirée $H$, divisée par un nombre de coups. Elle s'exprime donc, par exemple, en sieverts par coup ou en grays par coup.

5/ La base des spectres initiaux est quelconque. Il est préférable qu'elle couvre l'intégralité du domaine d'énergies envisagé et soit la plus riche possible. Il vaut mieux, à cet égard, disposer d'un grand nombre de sources de rayonnements, différentes les unes des autres, et de leurs spectres respectifs, mesurés dans le détecteur, plutôt que d'un seul résultat portant sur la combinaison des rayonnements en question.

En tout état de cause, s'il n'existe pas toujours de fonction satisfaisant à l'égalité ci-dessus, il est possible de s'en approcher à un degré de précision souhaité, par exemple en changeant la nature du milieu détecteur.

Notons enfin que la fonction de pondération, ou fonction de correction, est établie une fois pour toutes, pour une gamme de détecteurs et pour une grandeur souhaitée donnée H. Elle doit être transférable à tous les dosimètres ayant la même géométrie et le même milieu détecteur, et mesurant cette grandeur *H*.

La calibration du détecteur peut être très sommaire. Il suffit de l'exposer pendant une durée donnée à une source radioactive donnée dont l'activité est stable. Il est alors nécessaire et suffisant de s'assurer de la stabilité de la mesure d'énergie que le détecteur effectue. En effet, ce détecteur fonctionne en régime impulsionnel de sorte que la stabilité du nombre de coups mesuré est garantie par la non-saturation du taux de comptage. Il suffit de dimensionner convenablement la source pour que celui-ci ne soit pas saturé.

Une fois la fonction de correction établie, on fait fonctionner le dosimètre en régime impulsionnel ; et, pour chaque interaction i, on enregistre l'énergie déposée *Ed*[*i*]. Dès lors, suivant les moyens de calcul associés au détecteur, on peut :

(a) accumuler les coups dans un spectre sur une durée $\Delta T$ et, en fin de période, calculer la grandeur désirée :

$$\sum_{E} F(E) . \frac{dn}{dE}\Bigg)_{S} . \Delta E = H_{S}$$

(b) ou calculer, pour chaque interaction, l'incrément de dose :

$$H_{i} = H_{i-1} + F(Ed[i]) .$$

Dans tous les cas de figure, le débit de dose moyen correspond à la différence entre les doses finale et initiale, divisée par la durée de la période d'intégration. Notons tout de même que, si la période d'accumulation est grande, la seconde solution (b) permet de générer une alarme prompte en cas d'excursion sur des débits élevés et nuisibles.

On décrit, ci-après, un autre exemple de l'invention.

En vue de mesurer des doses absorbées, on choisit une gamme d'énergies [$E_{min}$ ; $E_{max}$], où $E_{min}$ est inférieure à 50 keV avec, à titre purement indicatif et nullement limitatif $E_{min}$ = 10 keV et $E_{max}$ = 1MeV ; on choisit un type de débit de dose H, par exemple Hp (0,07) ; on utilise un détecteur de rayonnements X et gamma, qui peut être un compteur de photons multi-pixels ou MPPC®, ou un détecteur au silicium ou un ensemble scintillateur-photomultiplicateur; on établit des spectres S mesurés par le détecteur pour divers rayonnements incidents X et gamma, dont les énergies respectives sont situées dans la gamme choisie et dont les doses respectives sont connues et, à partir des spectres S, on établit la fonction de pondération F(E) qui est une correspondance entre un incrément moyen de dose et une énergie moyenne E, déposée dans le détecteur.

Une installation permettant de déterminer F(E) est schématiquement illustrée par la figure 3. On y voit le détecteur 14, par exemple un MPPC® équipé d'un scintillateur plastique.

Il fonctionne en régime impulsionnel grâce à des moyens appropriés, non représentés. On expose successivement le détecteur 14 aux divers rayonnements S. Pour ce faire, on place successivement les sources correspondantes en regard du détecteur 14. Sur la figure 3, on voit l'une 16 de ces sources qui émet un rayonnement 18. Le détecteur 14 est muni de moyens électroniques de traitement 20, prévus pour traiter les signaux fournis par le détecteur lorsqu'il est exposé aux divers rayonnements S, établir les divers spectres (dn/dE)$_S$ correspondants et déterminer la fonction F(E).

La figure 4 est une vue schématique d'un exemple du système de mesure de dose, objet de l'invention. Il comprend un dosimètre 22 identique au détecteur 14 de la figure 3. Il s'agit donc d'un MPPC® équipé de son scintillateur. Ce dosimètre 22 est apte à fournir des signaux représentatifs des rayonnements 23 qu'il reçoit. La personne qui est pourvue du dosimètre n'est pas représentée. Le système de la figure 3 comprend aussi un dispositif électronique de traitement 24, dans lequel est mémorisée la fonction de pondération F(E) et qui est prévu pour traiter les signaux fournis par le dosimètre 22 et déterminer, à tout instant, la dose absorbée moyenne, reçue par la personne. Le dispositif 24 est pourvu de moyens 26 d'affichage des résultats des calculs effectués par ce dispositif 24.

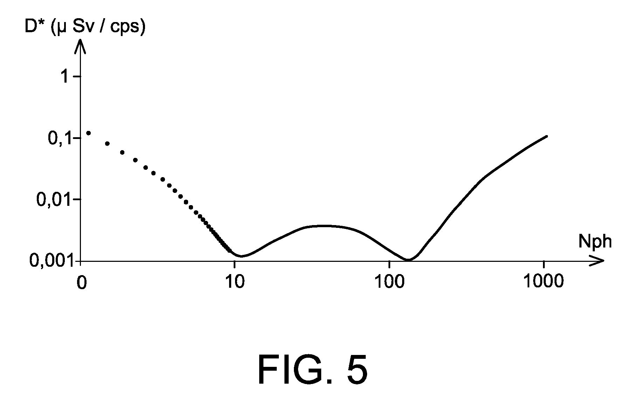

Un exemple de fonction de pondération est schématiquement illustré par la figure 5. En abscisses, on a porté le nombre de photoélectrons Nph produits par le scintillateur lors d'une interaction et mesurés par le MPPC®, et en ordonnées, la quantité D*, à savoir la dose divisée par un nombre de coups, quantité qui est exprimée en microsieverts par coups ($\mu$Sv/cps).

Pour déterminer cette fonction, on a utilisé cinq sources dont les caractéristiques sont données dans le tableau ci-dessous :

| Source | 60Co | 22Na | 137Cs | 133Ba | 241Am |
|---|---|---|---|---|---|
| Activité (Bq) | $2,89\times10^4$ | $2,2\times10^5$ | $2,96\times10^5$ | $1,7\times10^4$ | $3,85\times10^5$ |
| Dose en profondeur calculée ($\mu$Sv.h$^{-1}$.Bq$^{-1}$) | $4,26\times10^{-3}$ | $3,87\times10^{-3}$ | $1,06\times10^{-3}$ | $8,78\times10^{-4}$ | $3,00\times10^{-4}$ |

Dans cet exemple, on recherche la fonction de pondération sous la forme suivante :

$$F(Cp) = \sum_{k=0}^{6} a_k \log(Cp - C_0)^k$$

où Cp représente un numéro de canal du dispositif de traitement 24 et $C_0$ correspond au canal représentant une énergie nulle sur ce dispositif.

Les sources utilisées permettent d'obtenir les coefficients suivants :

$a_0$=0,001173049
$a_1$=0,000641594
$a_2$=0,041835963
$a_3$=0,080156831
$a_4$=0,042976988
$a_5$=0,003726018
$a_6$=0,000000002
$C_0$=4,965286421.

On en déduit la fonction F dont le graphe est représenté sur la figure 5.

On peut ensuite faire des essais en laboratoire pour ajuster la fonction de calibration F ainsi obtenue afin que la réponse du détecteur associé à la fonction F soit la plus proche possible de la réponse d'un dosimètre passif exprimant l'équivalent de dose déposé Hp(0,07). Cette calibration intègre ainsi la calibration effectuée en laboratoire et la réponse en énergie du dosimètre passif.

Dans les exemples de l'invention, que l'on a donnés, on a essentiellement considéré Hp(0,07). Mais l'invention n'est pas limitée à l'utilisation de Hp(0,07). Elle peut être mise en oeuvre avec tout autre type d'équivalent de dose H.

De plus, dans les exemples de l'invention que l'on a donnés plus haut, on a seulement considéré la mesure des rayonnements X et gamma. Mais l'invention peut être mise en oeuvre avec d'autres rayonnements, notamment les rayonnements d'électrons et les rayonnements de protons.

**Revendications**

1. Procédé de mesure de dose absorbée, **caractérisé en ce que** :

   - on choisit une gamme d'énergies,
   - on choisit un type de dose H,
   - on utilise un détecteur de rayonnements (14) d'un type donné,
   - on établit des spectres (dn/dE)$_S$ mesurés par le détecteur pour divers rayonnements incidents du type donné S, dont les énergies respectives sont situées dans la gamme choisie et dont les doses respectives sont connues, et
   - à partir des spectres (dn/dE)$_S$, on établit une fonction de pondération F(E), à savoir une correspondance entre un incrément moyen de dose et une énergie moyenne E, déposée dans le détecteur (14), et
   - on mesure le débit moyen de dose absorbée par une personne, exprimé dans la quantité H, au moyen d'un dosimètre identique au détecteur de rayonnements du type donné, ayant servi à l'établissement de la fonction de pondération F(E).

2. Procédé selon la revendication 1, dans lequel l'énergie la plus faible de la gamme d'énergies est inférieure à 50 keV.

3. Procédé selon l'une quelconque des revendications 1 et 2, dans lequel le type de débit de dose H choisi est Hp (0,07).

4. Procédé selon l'une quelconque des revendications 1 à 3, dans lequel le détecteur (14) est un détecteur de rayonnements X et gamma.

5. Procédé selon la revendication 4, dans lequel le détecteur (14) est choisi parmi les compteurs de photons multi-pixels, les détecteurs au silicium et les ensembles scintiflateur-photomultiplicateur.

6. Procédé selon l'une quelconque des revendications 4 et 5, dans lequel la fonction de pondération est établie en résolvant l'équation :

$$\sum_E F(E).(dn/dE)_S.\Delta E = H_S$$

pour chaque rayonnement S, où $H_S$ représente la dose associés au spectre $(dn/dE)_S$ représente le nombre de coups, enregistré à l'énergie E pour le rayonnement S, et $\Delta E$ représente le pas de mesure d'énergie pour le spectre.

7. Système de mesure de dose spécialement adapté pour mettre en oeuvre le procédé selon l'une quelconque des revendications 1 à 6, ce système étant **caractérisé en ce qu'**il comprend :

- un dosimètre (22) identique au détecteur de rayonnements de type donné, ce dosimètre étant apte à fournir des signaux représentatifs des rayonnements qu'il reçoit, et
- un dispositif électronique de traitement (24), dans lequel est mémorisée la fonction de pondération F(E) et qui est prévu pour traiter les signaux fournis par le dosimètre et déterminer, à tout instant, la dose absorbée moyenne.

**Patentansprüche**

1. Verfahren zum Messen einer absorbierten Dosis, **gekennzeichnet durch**:

- Auswählen eines Energiebereichs,
- Auswählen eines Dosistyps H,
- Verwenden eines Strahlungsdetektors (14) eines gegebenen Typs,
- Festlegen von **durch** den Detektor gemessenen Spektren $(dn/dE)_S$ für verschiedene einfallende Strahlungen vom gegebenen Typ S, wobei die jeweiligen Energien in dem ausgewählten Bereich enthalten sind und die jeweiligen Dosen bekannt sind, und
- Festlegen einer Gewichtungsfunktion F(E) ausgehend von den Spektren $(dn/dE)_S$, das heißt eines Zusammenhangs zwischen einem mittleren Dosis-Inkrement und einer mittleren Energie E, welche in dem Detektor (14) abgegeben worden ist, und
- Messen der mittleren Dosis-Menge, welche **durch** eine Person absorbiert worden ist, ausgedrückt **durch** die Größe H, mittels eines Dosimeters, welches identisch zu dem Strahlungsdetektor des gegebenen Typs ist, welcher zum Festlegen der Gewichtungsfunktion F(E) gedient hat.

2. Verfahren nach Anspruch 1, wobei die niedrigste Energie des Energiebereichs kleiner als 50 keV ist.

3. Verfahren nach einem der Ansprüche 1 und 2, wobei der ausgewählte Typ der Dosis-Menge H Hp (0,07) ist.

4. Verfahren nach einem der Ansprüche 1 bis 3, wobei der Detektor (14) ein Röntgen- und Gammastrahlen-Detektor ist.

5. Verfahren nach Anspruch 4, wobei der Detektor (14) aus Multipixel-Photonenzählern, Siliziumdetektoren und Szintillator-Photomultiplier-Anordnungen ausgewählt ist.

6. Verfahren nach einem der Ansprüche 4 und 5, wobei die Gewichtungsfunktion festgelegt wird, indem die Gleichung

$$\sum_E F(E).(dn/DE)_S.\Delta E = H_S$$

gelöst wird für jede Strahlung S, wobei Hs die Dosis repräsentiert, welche dem Spektrum zugeordnet ist, $(dn/dE)_S$ die Anzahl der Ereignisse repräsentiert, welche bei der Energie E für die Strahlung S registriert werden, und $\Delta E$

den Energie-Messabstand für das Spektrum repräsentiert.

7. System zum Messen einer Dosis, welches speziell dazu eingerichtet ist, ein Verfahren nach einem der Ansprüche 1 bis 6 durchzuführen, wobei das System **dadurch gekennzeichnet ist, dass** es umfasst:

  - ein Dosimeter (22), welches identisch ist zu dem Strahlungsdetektor eines gegebenen Typs, wobei das Dosimeter in der Lage ist, Signale zu liefern, welche die Strahlungen repräsentieren, die es empfängt, und
  - eine elektronische Verarbeitungsvorrichtung (24), in welcher die Gewichtungsfunktion F(E) gespeichert ist, und die dazu vorgesehen ist, die von dem Dosimeter gelieferten Signale zu verarbeiten und zu jeder Zeit die mittlere absorbierte Dosis auszugeben.

**Claims**

1. A method for measuring an absorbed dose, **characterized in that**:

  - a range of energies is chosen,
  - a dose type H is chosen,
  - a radiation detector (14) of a given type is used,
  - spectra $(dn/dE)_S$ measured by the detector are established for various incident radiations of the given type S, the respective energies of which are within the chosen range and the respective doses of which are known, and
  - from the spectra $(dn/dE)_S$, a weighting function F(E) is established, that is a correspondence between a mean dose increment and a mean energy E, deposited into the detector (14), and
  - the mean rate of a dose absorbed by a person is measured, expressed in the amount H, by means of a dosimeter identical to the radiation detector of the given type, that served to the establishment of the weighting function F(E).

2. The method according to claim 1, wherein the lowest energy of the range of energies is lower than 50 keV.

3. The method according to any of claims 1 and 2, wherein the chosen dose type H is Hp (0.07).

4. The method according to any of claims 1 to 3, wherein the detector (14) is a X and gamma radiation detector.

5. The method according to claim 4, wherein the detector (14) is chosen from the multi-pixel photon counters, the silicon detectors, and the scintillator-photomultiplier assemblies.

6. The method according to any of claims 4 and 5, wherein the weighting function is established by solving the equation:

$$\sum_{E} F(E).\left(dn/dE\right)_{S}.\Delta E = H_{S}$$

for each radiation S, where Hs represents the dose associated with the spectrum $(dn/dE)_S$ represents the count number, recorded at the energy E for the radiation S, and $\Delta E$ represents the energy measurement pitch for the spectrum.

7. A system for measuring a dose, specifically adapted to implement the method according to any of claims 1 to 6, this system being **characterized in that** it comprises:

  - a dosimeter (22) identical to the radiation detector of the given type, this dosimeter being able to provide signals representative of the radiations it receives, and
  - an electronic processing device (24), wherein the weighting function F(E) is stored and which is provided to process signals provided by the dosimeter and determine, at any time, the mean absorbed dose.

4

2

6

**FIG. 1**

10

8

12

**FIG. 2**

16    18    14    20

**FIG. 3**

23    22    24    26

**FIG. 4**

FIG. 5

**EP 2 959 316 B1**

## RÉFÉRENCES CITÉES DANS LA DESCRIPTION

**Documents brevets cités dans la description**

- US 5572028 A
- US 6423972 B
- US 20090127468 A